# EUROPEAN PATENT SPECIFICATION

(11) **EP 1 203 753 B1**
(45) Date of publication and mention of the grant of the patent: **21.12.2005**
(21) Application number: 01309251.5
(22) Date of filing: 31.10.2001
(51) Int. Cl.: C02F 1/461, C02F 1/463

(54) **Waste water treatment method and apparatus**
Verfahren und Vorrichtung zur Abwasserbehandlung
Procedé et dispositif de traitement des eaux usées

(30) Priority: 01.11.2000 JP 2000334328
(43) Date of publication of application: 08.05.2002
(73) Proprietor: SANYO ELECTRIC CO., LTD., Moriguchi-shi, Osaka (JP)
(72) Inventor: Iseki, Masahiro, c/o Sanyo Electric Co., Ltd., Moriguchi-shi, Osaka (JP); Ikegami, Kazuo, c/o Sanyo Electric Co., Ltd., Moriguchi-shi, Osaka (JP)
(74) Representative: Grey, Ian Michael

(56) References cited:
- EP-A- 0 659 692
- DE-A- 19 517 652
- DE-A- 19 819 303
- US-A- 3 635 764
- PATENT ABSTRACTS OF JAPAN vol. 2000, no. 01, 31 January 2000 (2000-01-31) & JP 11 267683 A (SANYO ELECTRIC CO LTD), 5 October 1999 (1999-10-05)
- PATENT ABSTRACTS OF JAPAN vol. 2000, no. 05, 14 September 2000 (2000-09-14) & JP 2000 051894 A (SANYO ELECTRIC CO LTD), 22 February 2000 (2000-02-22)

## Description

The present invention relates to a water treatment apparatus and method for waste water containing phosphoric acid, phosphorus compounds, phosphate ions, organic nitrogen, nitrite nitrogen, nitrate ions, and ammonia.

It is well known that the presence of phosphorus and nitrogen compounds is one of the causes of nutrition richness of rivers or lakes. Furthermore, many phosphorus and nitrogen compounds exist in the waste water of normal homes but carrying out purification treatment of these compounds is difficult and currently there are no effective measures that can be taken.

Various systems for the treatment of phosphorus compounds in domestic waste water have been proposed, such as the electrolytic dissolution of iron method disclosed in Japanese patent application Laid-open No. 3-89998. This uses a technique in which phosphate ions in the waste water are reacted with iron ions, condensed and precipitated and removed as water-insoluble salts such as FePO₄ and Fe(OH)ₓ(PO₄)_{y}. An iron electrode is disposed in an electrolytic bath and electrified to dissolve out the iron ions from the waste water. An electrochemical elution waste treatment method is also known which uses an anaerobic bath, an aerobic bath, and a treatment water bath. In this method, waste water in the treatment water bath is circulated through the anaerobic bath via the treatment bath in which the iron ions react with the phosphoric acid ions and are dissolved out. In the anaerobic bath, denitrifying bacteria live that exist only in this anaerobic bath so the nitrate ions and nitrite ions in circulated waste water are reduced into nitrogen gas, thereby removing nitrogen from the waste water. However, the reaction time of the denitrifying reaction by the above mentioned denitrifying bacteria is long which decreases treatment efficiency. In addition, to keep sufficient denitrifying bacteria in the anaerobic bath, it must have a large volume which increases equipment and building costs and a large area is needed to house the equipment. Further, since the action of the denitrifying bacteria deteriorates in winter, the denitrifying action deteriorates and the treatment efficiency becomes inconsistent.

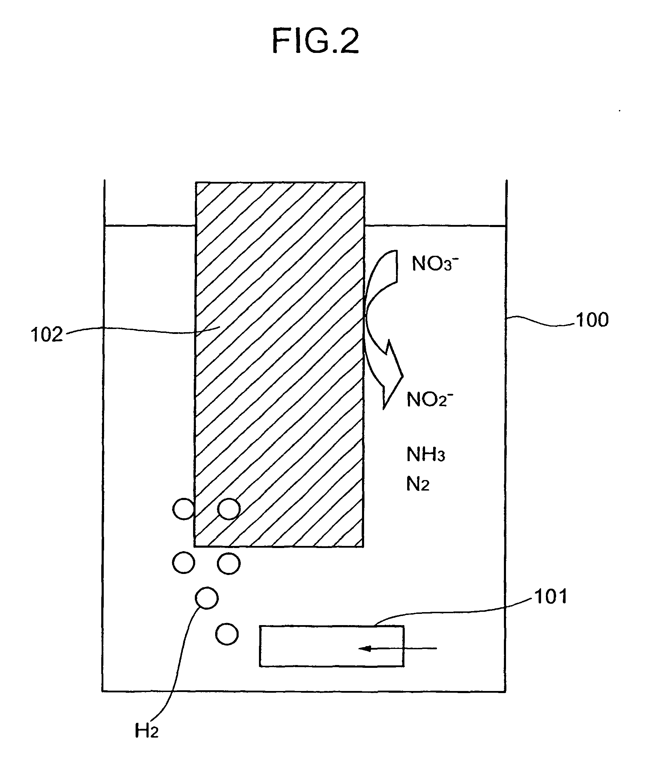

In order to try to solve these technical problems, a contact reduction treatment system was developed such as that shown in Figure 2 of the drawings in which hydrogen is fed from a hydrogen cylinder (not shown) into the anaerobic bath 100 via a gas scattering plate 101, and a reduction catalyst 102 is used as a catalyst in the presence of H₂ gas. On the basis of this treatment, the denitrifying treatment is performed stably and efficiently and the method uses the metallic reaction of zinc or the like in an alkali solution.

In the above various prior art denitrifying treatments discussed above, there are still problems in that the apparatus is complicated thereby increasing its cost. Moreover, agents for pH control need to be added which complicates maintenance.

The present invention has been developed in order to solve these conventional technical problems, and an object of the present invention is to provide a waste water treatment system in which removal of phosphorus and nitrogen can efficiently be carried out in an apparatus of reduced size thereby reducing the cost thereof.

It is known from JP 11 267683A to provide a waste water treatment apparatus comprising a waste water treatment chamber, a set of electrodes disposed so that at least a part thereof is immersed in the waste water in the waste water treatment chamber, a power source for supplying an electrolytic current to the set of electrodes, a control unit for controlling the power source, and a carrier being a denitrifying means provided in the vicinity of the electrodes.

A waste water treatment apparatus according to the present invention is characterised in that the metallic catalyst is disposed in the vicinity of both electrodes and the control unit is operable to periodically reverse the polarities of the electrodes so that both electrodes dissolve out, by electrolysis, iron ions or aluminium ions for precipitating and removing phosphoric acid ions in the waste water and, remove nitrogen by the denitrifying reaction with hydrogen generated from the electrode in the presence of the metallic catalyst, depending upon the polarity of the electrodes.

A waste water treatment method according to the invention is characterised by the step of periodically reversing the polarities of the electrodes so that both electrodes dissolve out, by electrolysis, iron ions or aluminium ions for precipitating and removing phosphoric acid ions in the waste water and, remove nitrogen by the denitrifying reaction with hydrogen generated from the electrode in the presence of a metallic catalyst, depending upon the polarity of the electrodes.

Since the waste water treatment apparatus and method of the present invention comprises only a waste water accommodation chamber, at least one set of electrodes, a control unit, and the metallic catalyst, it is simple in construction, small in size and cheap to produce. Furthermore, as it does not use any biological catalyst for the denitrifying reaction or any chemical for controlling pH in the waste water accommodation bath, as in conventional systems, the treatment of the waste water can be performed without being affected by the environment in which the waste water treatment is performed. Thus, in comparison with conventional waste water treatment systems, the amount of mud generated after treatment is substantially reduced.

Since the polarity of the set of electrodes is periodically reversed, the drawback that only one electrode is dissolved out or that the electrode is wasted early or inactivated is avoided.

On the side of the electrode on which iron ions or aluminum ions are dissolved out by electrolysis, precipitation and removal of phosphoric acid ions can be performed, and one the other electrode side, removal of nitrogen can be performed by the metallic catalyst that acts on the denitrifying reaction by hydrogen generated from the electrode, and so the removal of phosphorus and the removal of nitrogen can be performed at once.

Preferably, the electrodes are made of a noble metal modified with a copper atom, or copper.

Since the metallic catalyst is preferably made of a noble metal modified with copper atoms or copper, on the electrode side at which the iron ions or aluminum ions are dissolved out by electrolysis, precipitation and removal of phosphoric acid ions can be performed, and on the other electrode side, the removal efficiency of nitrogen can be improved by the metallic catalyst that acts on the denitrifying reaction by hydrogen generated from the electrode.

A diaphragm may be provided between the electrodes to improve the removal of nitrogen by the denitrifying reaction.

A preferred method and apparatus of the invention will now be described, by way of example only, with reference to the accompanying drawings, in which:
Figure 1 is a schematic view of a water treatment apparatus of the present invention; and
Figure 2 is a schematic view of a prior art waste water treatment apparatus.

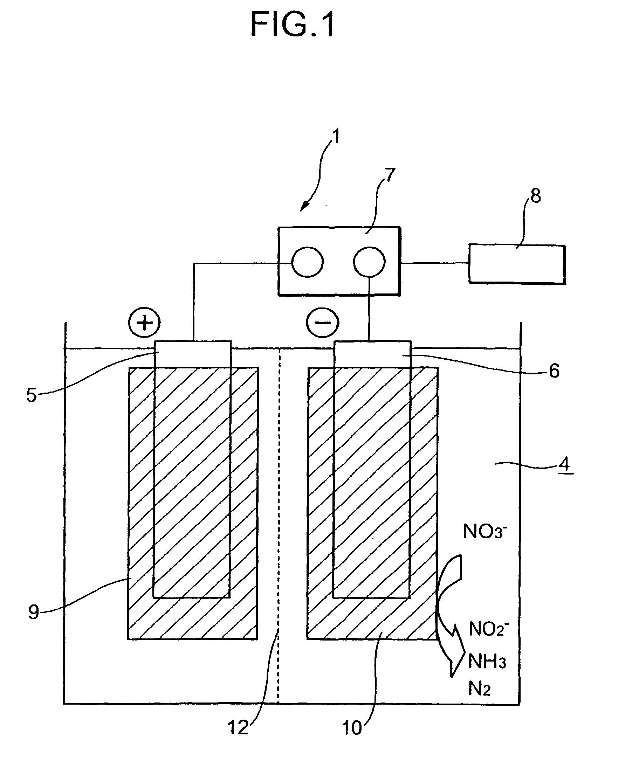

Figure 1 shows waste water treatment apparatus 1 which comprises a waste water treatment chamber 4 having an inlet (not shown) and an outlet (not shown) for the waste water, a pair of electrodes 5 and 6 are disposed opposite each other so that at least part thereof is immersed in the waste water in the treatment chamber 4. A power source 7 is provided for electrifying the electrodes 5,6, and a control unit 8 controls the power source 7. Metallic catalysts 9 and 10 made of, for instance, an alloy of platinum and copper are positioned adjacent the electrodes 5,6. Each of the metallic catalyst 9 and 10 is cylindrical in shape but this is not essential. Each metallic catalyst 9 and 10 is formed into a net to increase the contact area with the nitrate ions, nitrite ions, or ammonium in the waste water. Although the metallic catalysts are preferably made of an alloy of platinum and copper for improving the efficiency of the denitrifying reaction, other metallic catalysts may be used.

The control unit 8 controls the voltage applied from the power source 7 to the electrodes 5 and 6, and it periodically reverses the polarities of the electrodes 5 and 6, for example, each day in the illustrated embodiment.

Each electrode 5 and 6 is soluble and made of an iron ion and/or aluminum ion generating source such as iron, iron alloy, aluminium, aluminium alloy, or iron-aluminium alloy. If the polarities of the electrodes are not to be reversed by the control unit 8 in the illustrated embodiment, one of the electrodes, for example, the electrode 6 may be made of an insoluble metal such as platinum, gold, titanium, or carbon.

In Figure 1, the electrode 5 acts as the anode and the electrode 6 acts as the cathode. The anode electrode 5 is therefore made of iron so that iron ions are dissolved out from the electrode 5 and phosphate ions or hydroxide ions contained in the waste water in the waste water treatment chamber 4 condense and react and the iron ions dissolved out from the electrode 5 generate iron phosphate or iron hydroxide.

Although the treatment by an electrolytic dissolution method in which iron in the phosphate ion containing waste water utilizes a reaction (reaction A) in which the iron ions dissolved out from the electrode 5 react with the phosphate ions in the waste water to generate water-insoluble salts of phosphoric acid and iron, hydroxide ions still exist in the waste water so the dissolved iron ions can also react with the hydroxide ions (reaction B). Since reaction B is faster than reaction A, the quantity of electric current must be increased to process the phosphate ions thereby also increasing the flowing-out quantity of the iron ions.

However, if calcium ions or magnesium ions exist in the waste water, they react with the hydroxide ions (reaction D). Since this reaction D is prior to reaction B between the iron ions and hydroxide ions, reaction B is suppressed and the iron ions are utilized efficiently in reaction A with the phosphate ions. Further, since the calcium ions and magnesium ions also react with the phosphate ions to generate water-insoluble salts, they contribute to the removal of the phosphate ions.

For this purpose, in the present invention, calcium ions or magnesium ions can be added so that reaction B between the iron ions and hydroxide ions is suppressed and the reaction A between the iron ions and phosphate ions is efficiently performed. This reduces the quantity of electricity needed thereby providing a power saving and reducing the amount of dissolution of iron. Although this embodiment has been described using an iron electrode 5, it may be made of aluminum.

When the power source 7 is applied to the cathode electrode 6, hydrogen is generated from the surface thereof. Therefore, on the cathode electrode 6, the nitrate ions in the waste water react with the hydrogen generated from the surface of the electrode 6 under the action of the above described metallic catalyst 10, and are reduced to nitrite ions or nitrogen gas by the denitrifying action. Any nitrite ions that have not been converted into nitrogen further react with the hydrogen under the metallic catalyst 10 and change into nitrogen. It will be appreciated therefore that on the electrode 5 side where the iron ions or aluminum ions are dissolved out by electrolysis, the precipitation and removal of phosphoric acid ions can be performed, and on the other electrode 6 side, the removal of nitrogen can be performed by the metallic catalyst 10 that acts on the denitrifying reaction by hydrogen, and the removal of phosphorus and the removal of nitrogen can be performed simultaneously.

Since the waste water treatment apparatus 1 according to the present invention comprises only the waste water accommodation chamber 4, electrodes 5 and 6, power source 7, control unit 8, and metallic catalysts 9 and 10, the apparatus is extremely simple and small in size thereby reducing the cost thereof. Furthermore, since no biological catalyst is used for the denitrifying reaction, or any chemical is used for controlling pH in the waste water accommodation bath, as conventional systems, the treatment of the waste water can be performed without being affected by the environment in which the treatment is performed so maintenance is simplified.

In comparison with conventional waste water treatment systems, the amount of mud generated after treatment can be significantly reduced and the treatment of the waste water can be extremely efficiently performed.

If the polarity of the voltage applied from the power source 7 to the electrodes 5 and 6 is periodically reversed, the electrode 6 becomes the anode and the electrode 5 becomes the cathode. Thus, the iron ions are dissolved out from the anode and the phosphate ions or hydroxide ions contained in the waste water condense and react and the iron ions dissolved out from the electrode 6 generate iron phosphate or iron hydroxide, and the phosphate ions can be removed from the waste water.

When the cathode electrode 5 is electrified by the power source 7, hydrogen is generated on its surface and nitrate ions in the waste water react with said hydrogen under the action of the metallic catalyst 9, and are reduced to nitrite ions or nitrogen gas by the denitrifying action. Any nitrite ions that have not been converted into nitrogen further react with the hydrogen under the action of the metallic catalyst 9 to change into nitrogen.

The precipitation and removal of the phosphoric acid ions is performed on the electrode 6 where the iron ions or aluminum ions are dissolved out by electrolysis whereas the removal of the nitrogen is performed on the electrode 5 by the metallic catalyst 9 which acts on the denitrifying reaction with the hydrogen, so removal of phosphorus and nitrogen is performed simultaneously.

As described above, the metallic catalysts 9, 10 are disposed in the vicinity of the electrodes 5, 6 respectively, and the polarities of the electrodes 5, 6 are periodically reversed by the control unit 8. Accordingly, when the polarity of the electrode becomes anode, the phosphoric acid ions are removed by the iron or aluminum ions, whereas when the polarity of the electrode becomes cathode, the removal of the nitrogen by the denitrifying reaction with the hydrogen is carried out in the presence of the metallic catalyst 9 or 10. Since the polarities of the electrodes 5, 6 are periodically reversed by the control unit 8, any inconvenience caused by one electrode only working for the dissolution and thereby wasting or become inactive is avoided. Maintenance is therefore simplified as changing the electrodes need not be carried out until both electrodes 5 and 6 have completely wasted.

Diaphragm 12 can be used for improving the efficiency of the removal of nitrogen by the denitrifying reaction. In the embodiment shown in Figure 1, each of the electrodes 5 and 6 is made of iron ions and/or aluminum ions such as iron, an iron alloy, aluminum, an aluminum alloy, or an iron-aluminum alloy. The metallic catalyst is made of a noble metal modified with copper atoms or copper so the efficiency of the removal of nitrogen by the denitrifying reaction is greatly improved.

The waste water treatment apparatus 1 of the present invention can be used very effectively for treating domestic waste water. Although it may be used alone, it can also be used in combination with another purification system such as an activation mud method, a diaphragm separation method, an anaerobic/aerobic circulation method, or the like, or it can be used as an integrated waste water purification system for an individual or communal home. Furthermore, it can also be used for a large-scale treatment system such as a sewage disposal plant.

It will be appreciated from the foregoing description that the invention provides an apparatus in which at least one set of electrodes is disposed so that at least a part thereof is immersed in the waste water in the waste water treatment chamber, and at least one of said electrodes dissolves out by electrolysis iron ions or aluminum ions for precipitating and removing phosphoric acid ions in the waste water, a power source supplying an electrolytic current to the set of electrodes which is controlled by a control unit and a metallic catalyst is disposed in the vicinity of at least the other of the set of electrodes to act on the denitrifying reaction of the hydrogen in the waste water, on the electrode side at which the iron ions or aluminum ions are dissolved out by electrolysis, precipitation and removal of phosphoric acid ions can be performed, whereas on the other electrode side, removal of nitrogen can be performed by the metallic catalyst that acts on the denitrifying reaction by the hydrogen generated on the electrode, so the removal of phosphorus and nitrogen can be performed simultaneously.

As the waste water treatment apparatus of the present invention comprises only a waste water accommodation chamber, at least one set of electrodes, a control unit, and a metallic catalyst, its construction is simple and its size is decreased so a corresponding decrease in cost is achieved. Furthermore, as the waste water treatment apparatus does not use any biological catalyst for the denitrifying reaction, or any chemical for controlling pH in the waste water accommodation bath as in prior art systems, the treatment of waste water can be performed without being affected by the environment in which the waste water treatment is performed.

In comparison with prior art waste water treatment devices, the amount of mud generated after treatment is substantially decreased.

It is a further advantage of the invention that since both electrodes are used as electrodes for dissolving out by electrolysis the iron ions or aluminum ions for precipitating and removing phosphoric acid ions in the waste water and the metallic catalyst is disposed in the vicinity of each electrode, and the polarities of the electrodes are periodically reversed by the control unit, the removal of the phosphoric acid ions by the iron ions or aluminum ions is performed on the electrode side whose polarity is anode, and the removal of nitrogen by the denitrifying reaction by hydrogen generated from the electrode is performed under the metallic catalyst on the electrode side whose polarity is cathode, the inconvenience that only one electrode is dissolved out and is wasted or inactivated early can be avoided.

It is a still further advantage of the invention that since at least one set of electrodes is disposed in the waste water treatment chamber so that at least part thereof immersed in the waste water, at least one of which dissolves out by electrolysis iron ions or aluminum ions for precipitating and removing the phosphoric acid ions in the waste water, a control unit supplies an electrolytic current to the set of electrodes and controls the electrolytic current, and a metallic catalyst is disposed in the vicinity of at least the other of the set of electrodes to act on the denitrifying reaction by hydrogen generated from the electrode in the waste water, on the electrode side at which the iron ions or aluminum ions are dissolved out by electrolysis, precipitation and removal of the phosphoric acid ions can be performed, and on the other electrode side, removal of nitrogen can be performed by the metallic catalyst that acts on the denitrifying reaction by the hydrogen generated from the electrode, and so the removal of phosphorus and nitrogen can be performed simultaneously.

In addition to the advantages described above, since the electrode is made of a noble metal modified with copper atoms or copper, on the electrode side at which the iron ions or aluminum ions are dissolved out by electrolysis, precipitation and removal of the phosphoric acid ions can be performed, and on the other electrode side, the removal efficiency of the nitrogen can be improved when removal of the nitrogen is performed by the metallic catalyst that acts on the denitrifying reaction by hydrogen generated from the electrode.

If a diaphragm is provided between the electrodes, the removal efficiency of nitrogen by the denitrifying reaction can be improved further.

## Claims

1. A waste water treatment apparatus comprising a waste water treatment chamber (4), a set of electrodes (5,6) disposed so that at least a part thereof is immersed in the waste water in the waste water treatment chamber (4), a power source (7) for supplying an electrolytic current to the set of electrodes, a control unit (8) for controlling the power source, and a metallic catalyst (9,10) which acts on the denitrifying reaction with hydrogen in the waste water wherein the metallic catalyst is disposed in the vicinity of both electrodes and the control unit (8) is operable to periodically reverse the polarities of the electrodes so that both electrodes dissolve out, by electrolysis, iron ions or aluminium ions for precipitating and removing phosphoric acid ions in the waste water and, remove nitrogen by the denitrifying reaction with hydrogen generated from the electrode (5,6) in the presence of the metallic catalyst, depending upon the polarity of the electrodes.

2. Apparatus according to claim 1 wherein the metallic catalyst is made of a noble metal modified with a copper atom or copper.

3. Apparatus according to claim 1 or claim 2 wherein a diaphragm is disposed between the electrodes.

4. A waste water treatment method comprising the use of a waste water treatment apparatus having a treatment chamber (4), a set of electrodes (5,6) disposed so that at least part thereof is immersed in the waste water in the chamber (4), a power source, (7) for supplying electric current to the electrodes (5,6) a control unit (8) and a metallic catalyst disposed in the vicinity of both electrodes and which acts on the denitrifying reaction with hydrogen in the waste water, the method being **characterised by** the step of periodically reversing the polarities of the electrodes (5,6) so that both electrodes (5,6) dissolve out, by electrolysis, iron ions or aluminium ions for precipitating and removing phosphoric acid ions in the waste water and, remove nitrogen by the denitrifying reaction with hydrogen generated from the electrode in the presence of a metallic catalyst, depending upon the polarity of the electrodes (5,6).

## Patentansprüche

1. Vorrichtung zur Abwasserbehandlung, umfassend eine Abwasserbehandlungskammer (4), einen Satz Elektroden (5, 6), die so angeordnet sind, dass mindestens ein Teil davon im Abwasser in der Abwasserbehandlungskammer (4) eingetaucht ist, eine Stromquelle (7) zum Zuführen eines Elektrolytflusses zum Satz Elektroden, eine Steuereinheit (8) zur Steuerung der Stromquelle und einen Metallkatalysator (9, 10), der auf die denitrifizierende Reaktion mit Wasserstoff im Abwasser einwirkt, wobei der Metallkatalysator in der Nähe beider Elektroden angeordnet ist und die Steuereinheit (8) zum periodischen Umkehren der Polaritäten der Elektroden betreibbar ist, so dass beide Elektroden mittels Elektrolyse Eisenionen oder Aluminiumionen zum Ausfällen und Entfernen von Phosphorsäureionen im Abwasser herauslösen und mittels der denitrifizierenden Reaktion mit Wasserstoff, der von der Elektrode (5, 6) in Anwesenheit des Metallkatalysators erzeugt wird, Stickstoff entfernen, je nach der Polarität der Elektroden.

2. Vorrichtung nach Anspruch 1, wobei der Metallkatalysator aus einem Edelmetall, das mit einem Kupferatom modifiziert wurde, oder Kupfer gefertigt ist.

3. Vorrichtung nach Anspruch 1 oder 2, wobei eine Membran zwischen den Elektroden angeordnet ist.

4. Verfahren zur Abwasserbehandlung, umfassend die Verwendung einer Vorrichtung zur Abwasserbehandlung mit einer Behandlungskammer (4), einem Satz Elektroden (5, 6), die so angeordnet sind, dass mindestens ein Teil davon im Abwasser in der Kammer (4) eingetaucht ist, einer Stromquelle (7) zum Zuführen eines Elektrolytflusses zu den Elektroden (5, 6), einer Steuereinheit (8) und einem Metallkatalysator, der in der Nähe beider Elektroden angeordnet ist und auf die denitrifizierende Reaktion mit Wasserstoff im Abwasser einwirkt, wobei das Verfahren durch den Schritt des periodischen Umkehrens der Polaritäten der Elektroden (5, 6) **gekennzeichnet** ist, so dass beide Elektroden (5, 6) mittels Elektrolyse Eisenionen oder Aluminiumionen zum Ausfällen und Entfernen von Phosphorsäureionen im Abwasser herauslösen und mittels der denitrifizierenden Reaktion mit Wasserstoff, der von der Elektrode in Anwesenheit des Metallkatalysators erzeugt wird, Stickstoff entfernen, je nach der Polarität der Elektroden (5, 6).

## Revendications

1. Appareil de traitement des eaux usées comprenant une chambre de traitement des eaux usées (4), un jeu d'électrodes (5, 6) disposées de telle sorte qu'elles soient au moins en partie immergées dans l'eau usée contenue dans la chambre de traitement des eaux usées (4), une source d'alimentation électrique (7) pour fournir un courant électrolytique au jeu d'électrodes, une unité de commande (8) pour commander la source d'alimentation, et un catalyseur métallique (9, 10) qui agit sur la réaction de dénitrification avec l'hydrogène dans l'eau usée, dans lequel le catalyseur métallique est disposé à proximité des deux électrodes et l'unité de commande (8) permet d'inverser périodiquement la polarité des électrodes de telle sorte que les deux électrodes dissolvent, par électrolyse, les ions de fer et les ions d'aluminium pour précipiter et enlever les ions d'acide phosphorique contenus dans l'eau usée, et pour enlever l'azote par la réaction de dénitrification avec l'hydrogène créée à partir des électrodes (5, 6) en présence du catalyseur métallique, en fonction de la polarité des électrodes.

2. Appareil selon la revendication 1, dans lequel le catalyseur métallique est constitué d'un métal noble modifié avec un atome de cuivre ou du cuivre

3. Appareil selon la revendication 1 ou la revendication 2, dans lequel une membrane est disposée entre les électrodes.

4. Procédé de traitement des eaux usées comprenant l'utilisation d'un appareil de traitement des eaux usées ayant une chambre de traitement (4), un jeu d'électrodes (5, 6) disposées de telle sorte qu'elles soient au moins en partie immergées dans l'eau usée contenue dans la chambre (4), une source d'alimentation électrique (7) pour fournir un courant électrique aux électrodes (5, 6), une unité de commande (8), et un catalyseur métallique disposé à proximité des deux électrodes et qui agit sur la réaction de dénitrification avec l'hydrogène contenu dans l'eau usée, le procédé étant **caractérisé par** l'étape consistant à inverser périodiquement la polarité des électrodes (5, 6) de telle sorte que les deux électrodes (5, 6) dissolvent, par électrolyse, les ions de fer ou d'aluminium pour précipiter et enlever les ions d'acide phosphorique contenus dans l'eau usée, et pour enlever l'azote par la réaction de dénitrification avec l'hydrogène créée à partir des électrodes en présence du catalyseur métallique, en fonction de la polarité des électrodes (5, 6).
